# EUROPEAN PATENT APPLICATION

(11) **EP 3 713 005 A1**
(43) Date of publication of application: **23.09.2020**
(21) Application number: 18878895.4
(22) Date of filing: 08.11.2018
(51) Int. Cl.: H01M 10/058, G01N 27/30

(54) **REFERENCE ELECTRODE AND METHOD FOR PREPARING LITHIUM ION BATTERY HAVING REFERENCE ELECTRODE**

(30) Priority: 17.11.2017 CN 201711143955
(71) Applicant: Tsinghua University, Beijing 100084 (CN)
(72) Inventor: CHU, Zhengyu, Beijing 100084 (CN); PU, Nan, Beijing 100084 (CN); FENG, Xuning, Beijing 100084 (CN); LU, Languang, Beijing 100084 (CN); LI, Jianqiu, Beijing 100084 (CN); OUYANG, Minggao, Beijing 100084 (CN)
(74) Representative: Balder IP Law, S.L.
(86) International application number: PCT/CN2018/114516
(87) International publication number: WO 2019/096053

(57) **Abstract**

The present disclosure relates to methods for making a reference electrode and a lithium ion battery having the reference electrode. The reference electrode obtained has a long service life, moreover, the manufacturing process is simple and can meet the industrial production requirements, making the production and the application of the lithium-ion battery with the reference electrode possible.

## Description

### CROSS-REFERENCE TO RELATED APPLICATIONS

This application claims the benefits of priority of China Patent Application No. 201711143955.2, filed on November 17, 2017, and entitled "Methods for Making Reference Electrode and Lithium Ion Battery Having the Same", the contents of which are incorporated by reference herein.

### FIELD

The present disclosure relates to methods for making reference electrode and lithium ion battery having the same, and belongs to the technical fields of measurement of an electrode potential and manufacture of an electrode.

### BACKGROUND

The electrode potential is one of the most important parameters in researches of electrochemistry and battery. The open-circuit potential is an electrode potential in a thermodynamic equilibrium state. In practice, a voltage vs. SOC curve of the battery obtained during a charge-discharge process at a low current can be regarded as an open-circuit voltage curve. If there is a current flowing through an electrode, the electrode would be polarized and a potential of the electrode would be deviated due to an occurrence of overpotential. The detailed information of a reaction occurring inside the electrode can be obtained by measuring a potential varying curve of the electrode. Taken the lithium ion battery with graphite anode as an example, overcharging or low-temperature charging may result in a Li plating at the graphite anode, characterized in that anode potential is below to equilibrium potential for the lithium-plating. Therefore, the Li plating side reaction can be detected by measuring the electrode potential. However, a battery includes two electrodes, the polarization of the individual electrode cannot be detected directly because the overpotential we gauged is composed the polarized potential of positive and negative electrodes, respectively. More specifically, one or more reference electrodes are interposed between the cathode and the anode to measure the voltage difference between the electrode and the reference electrode. The reference electrode in the related art is mainly made of electrochemical deposition , lithium foil, lithium alloy, lithium-containing metal oxide, or lithium-containing phosphate, and so on.

The research article Development of reliable lithium micro-reference electrodes for long-term in-situ studies of lithium-based battery systems, Journal of The Electrochemical Society, 2004(DOI:10.6100/IR624713*)* discloses lithium reference electrodes made by electrochemical deposition on two surfaces of a micron sized copper wire positioned in the battery. The method can minimize the blocking to the lithium ion flow. However, since the reference electrode is too small, the amount of lithium loaded on the reference electrode is small, and the deposition layer is easy to be uneven. Consequently, a potential drift may occur after a long-time measurement, which makes it difficult to be applied in durability studies, and has a high requirement of input impedance of the measuring instrument.

Another method involves inserting a lithium foil directly into a battery. The lithium metal is connected to a current collector by a physical pressing method. In the research article Self-Discharge of LiMn2O4/C Li-Ion Cells in Their Discharged State, J. Electrochem.Soc., Vol. 145, No. 1, 1998, lithium is physically connected to, i.e., pressed against, a current collector (for example, a copper mesh). In this method, the copper mesh has a relatively large pore diameter which is at the millimeter-scale. However, the connection reliability of the lithium and the copper mesh cannot be ensured by this physical connection method. A poor contact can lead to an extremely large ohmic resistance of the reference electrode influencing the use thereof.

In view of the above, the difficulties in the development of the reference electrode can be contributed to the lithium amount in the electrode. The size of the reference electrode should be as small as possible to decrease the blocking effect on lithium ions in the electrolyte. However, this will reduce the lithium amount in the material, and thus weaken the signal. In addition, an electrode material loss or a potential drift tends to occur because of the micro-currents in the measurement.

### SUMMARY

An object of the present disclosure is to provide a method for making a reference electrode and a method for making a lithium ion battery having the reference electrode, to solve the unstable problem of the measurement using the reference electrode and improve the service life of the reference electrode, thereby achieving a long term multi-cycle potential measurement of the individual electrode and increasing the accuracy of the measuring result.

The method for making the reference electrode in the present disclosure includes:
S11, washing and then drying a reference electrode substrate;
S12, welding the reference electrode substrate to a lower portion of a current collecting metal sheet, an upper portion of which is adhered with a tab binder;
S13, melting lithium metal to liquid state and continuing heating to remove an impurity on a surface of the liquid state lithium metal under a water-free and oxygen-free condition;
S14, immersing a lower portion of the reference electrode substrate welded with the current collecting metal sheet into the liquid lithium and standing to coat a lithium metal layer on the lower portion of the reference electrode substrate;
S15, taking out a reference electrode welded with the current collecting metal sheet from the liquid lithium, cooling, and warping a portion below the tab binder of the reference electrode with a separator by a winding method, thereby obtaining the reference electrode wrapped with the separator.

The method for making the lithium ion battery having the reference electrode in the present disclosure includes:
S10, making a reference electrode, which comprises:
   S11, washing and then drying a reference electrode substrate;
   S12, welding the reference electrode substrate to a lower portion of a current collecting metal sheet, an upper portion of which is adhered with a tab binder;
   S13, melting lithium metal to liquid state and continuing heating to remove an impurity on a surface of the liquid state lithium metal under a water-free and oxygen-free condition;
   S14, immersing a lower portion of the reference electrode substrate welded with the current collecting metal sheet into the liquid lithium and standing to coat a lithium metal layer on the lower portion of the reference electrode substrate;
   S15, taking out a reference electrode welded with the current collecting metal sheet from the liquid lithium, cooling, and warping a portion below the tab binder of the reference electrode with a separator by a winding method, thereby obtaining the reference electrode wrapped with the separator;
S20, interposing the reference electrode between a separator and an anode plate of a cell of the lithium ion battery and protrude an upper end of the reference electrode out from the cell of the lithium ion battery under the water-free and oxygen-free condition; and
S30, packaging the lithium ion battery implanted with the reference electrode under the water-free and oxygen-free condition, thereby obtaining the lithium ion battery having the reference electrode.

Another method for making the lithium ion battery having the reference electrode in the present disclosure includes:
S100, making a reference electrode, which comprises:
   S110, providing a porous copper foam, a porous nickel foam, a copper mesh, or a mesh as a reference electrode substrate; and washing the reference electrode substrate with acetone or deionized water and then drying for later use, wherein a material of the reference electrode substrate has a pore size of 50 µm to 500 µm, a thickness of the reference electrode substrate is 0.1mm to 1 mm, and an area of the reference electrode substrate is 1% to 10% of an area of an electrode plate of the lithium ion battery;
   S120, welding the reference electrode substrate obtained from the step S110 to a lower portion of a current collecting metal sheet of which an upper portion is adhered with a tab binder, to allow an upper portion of the reference electrode substrate to be overlapped with the lower portion of the current collecting metal sheet, wherein an area of the current collecting metal sheet is smaller than the area of the reference electrode substrate; and vacuum drying at 60 °C to 90 °C under the water-free and oxygen-free condition for 4 to 7 hours, cooing, and then transferring into and preserving in a water-free and oxygen-free environment, wherein the current collecting metal sheet is configured for collecting an electric current, a material of the current collecting metal sheet is nickel or aluminum, a thickness of the current collecting metal sheet is 0.1 mm to 1 mm, and a length of the current collecting metal sheet is 10 mm to 30 mm; and
   S130, melting lithium metal to liquid state and continuing heating to 200 °C to 500 °C to remove an impurity on a surface of the liquid state lithium metal under the water-free and oxygen-free condition; immersing the lower portion of the reference electrode substrate whose upper portion is welded with the current collecting metal sheet obtained from the step S120 into the liquid lithium and standing for 1 min to 5 min to allow a lithium metal layer having a thickness of 10 µm to 100µm to coat on the lower portion of the reference electrode substrate; and taking out, cooling, and wrapping a portion below the tab binder with a separator by a winding method to allow the separator to be wrapped tightly and entirely around the current collecting metal sheet and the reference electrode substrate, thereby obtaining the reference electrode wrapped with the separator, wherein a material of the separator is porous polypropylene, porous polyethylene, porous polypropylene coated with ceramic, porous polyethylene coated with ceramic, or non-woven fabric;
S200, interposing the reference electrode obtained from the step S100 between a separator and an anode plate of a cell of the lithium ion battery under the water-free and oxygen-free condition, and protruding an upper end of the reference electrode out from the cell of the lithium ion battery for 1 mm to 2 mm;
S300, packaging the lithium ion battery implanted with the reference electrode with an aluminum plastic film under the water-free and oxygen-free condition, thereby obtaining the lithium ion battery having the reference electrode.

In the method for making the reference electrode and the method for making the lithium ion battery having the reference electrode according to the present disclosure, the lithium metal can be formed on the surface of the substrate material, while the porous property of the substrate material can be maintained, so that small molecules in the liquid electrolyte can pass through the pores, and the normal operation of the battery will not be influenced. Moreover, the thickness of the lithium metal layer formed on the substrate can be controlled by regulating parameters in the making process to ensure that the porous property of the substrate material can be retained while sufficient lithium can be loaded on the substrate to meet measurement requirements. Therefore, the reference electrode made by the method according to the present disclosure can have sufficient micro-structures as well as long service life. In addition, the manufacturing process is simple and can meet the industrial production requirements, making the industrial production and the application of the lithium-ion battery with the reference electrode possible.

### BRIEF DESCRIPTION OF THE DRAWINGS

To describe the technical solutions of the embodiments of the present disclosure or the related technology more clearly, the following briefly introduces the accompanying drawings for describing the embodiments or the related technology. Obviously, the accompanying drawings in the following description are only embodiments of the present disclosure, and a person of ordinary skill in the art may still derive other drawings from the accompanying drawings of the present disclosure without creative effort.
FIG. 1 is a flowchart of a method for making a reference electrode according to an embodiment of the present disclosure.
FIG. 2 is a schematic structural view of a lithium ion battery having the reference electrode according to an embodiment of the present disclosure.
FIG. 3 is a front view of the reference electrode according to an embodiment of the present disclosure.
FIG. 4 is a flowchart of another method for making the reference electrode according to an embodiment of the present disclosure.
FIG. 5 is a side view of the reference electrode shown in the FIG. 3 according to an embodiment of the present disclosure.
FIG. 6 is a flowchart of a method for making a lithium ion battery having the reference electrode according to an embodiment of the present disclosure.
FIG. 7 is a schematic view of the lithium ion battery implanted with the reference electrode according to an embodiment of the present disclosure.
FIG. 8 is a flowchart of another method for making the lithium ion battery having the reference electrode according to an embodiment of the present disclosure.
FIG. 9 is a flowchart of yet another method for making the lithium ion battery having the reference electrode according to an embodiment of the present disclosure.
FIG. 10 is a schematic diagram showing a measuring circuit connecting the lithium ion battery having the reference electrode according to an embodiment of the present disclosure.
FIG. 11 is a diagram showing results of rate performance test for the lithium ion battery having the reference electrode according to an embodiment of the present disclosure.
FIG. 12 is a diagram showing results of capacity test for the lithium ion battery having the reference electrode according to an embodiment of the present disclosure.

### Description of Reference Numeral

lithium ion battery 1; reference electrode 2; cathode 3; anode 4, tab binder 5, current collecting metal sheet 6, reference electrode substrate 7, welding spot 8, lithium metal layer 9, cathode plate 10, separator 11 between the cathode plate and the anode plate of the lithium ion battery

### DETAILED DESCRIPTION

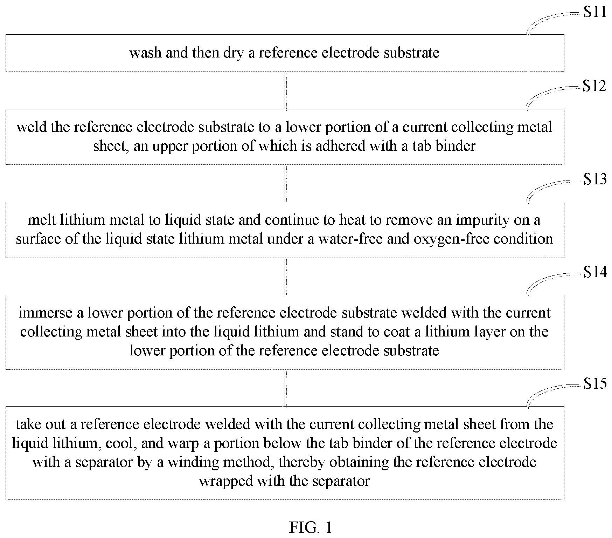

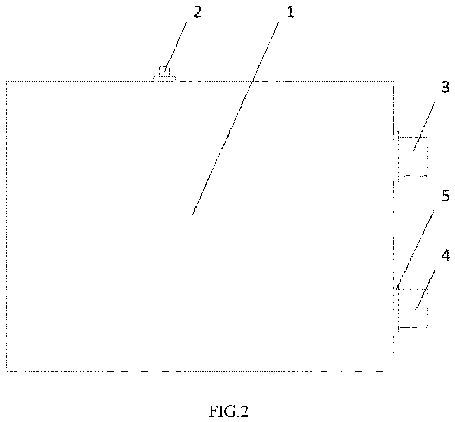

Referring to FIGs. 1 to 3, a method for making a reference electrode is provided in the present disclosure. The method for making the reference electrode includes:
S11, washing and then drying a reference electrode substrate;
S12, welding the reference electrode substrate 7 to a lower portion of a current collecting metal sheet 6, an upper portion of which is adhered with a tab binder 5;
S13, melting lithium metal to liquid state and continuing heating to remove an impurity on a surface of the liquid state lithium metal under a water-free and oxygen-free condition;
S14, immersing a lower portion of the reference electrode substrate 7 welded with the current collecting metal sheet 6 into the liquid lithium and standing to coat a lithium metal layer on the lower portion of the reference electrode substrate 7;
S15, taking out the reference electrode 2 welded with the current collecting metal sheet 6 from the liquid lithium, cooling, and warping a portion below the tab binder 5 of the reference electrode 2 with a separator by a winding method, thereby obtaining a reference electrode 2 wrapped with the separator.

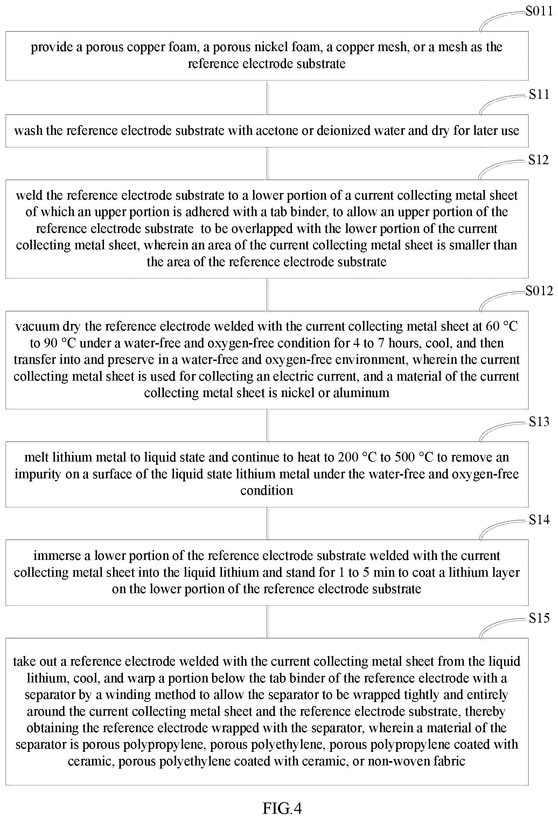

Referring to FIG. 4, in an embodiment, prior to the step S11, S011, a porous copper foam, a porous nickel foam, a copper mesh, or a mesh is adopted as the reference electrode substrate 7. In the step S11, the reference electrode substrate 7 is washed with acetone or deionized water and then dried for later use. In this embodiment, the material of the reference electrode substrate 7 can have a pore size of 50 µm to 500 µm, and a thickness of the reference electrode substrate 7 can be 0.1 mm to 1 mm.

In an embodiment, in the step S12, the reference electrode substrate 7 is welded to the lower portion of the current collecting metal sheet 6 whose upper portion is adhered with the tab binder 5, to allow an upper portion of the reference electrode substrate 7 to be overlapped with the lower portion of the current collecting metal sheet 6. An area of the current collecting metal sheet 6 is smaller than an area of the reference electrode substrate 7. After the step S12, S012, the reference electrode 2 welded with the current collecting metal sheet 6 is vacuum dried at 60 °C to 90 °C under the water-free and oxygen-free condition for 4 to 7 hours, cooled, and then transferred into and preserved in a water-free and oxygen-free environment. The current collecting metal sheet 6 is used for collecting an electric current. A material of the current collecting metal sheet 6 is nickel or aluminum. In this embodiment, a thickness of the current collecting metal sheet 6 can be 0.1 mm to 1 mm. A length of the current collecting metal sheet 6 can depend on a location of the reference electrode 2 disposed with respect to the battery, and can be 10 mm to 30 mm.

In an embodiment, in the step S13, the lithium metal is melted into the liquid state and is continuously heated to 200 °C to 500 °C to remove the impurity on the surface of the liquid state lithium metal under the water-free and oxygen-free condition.

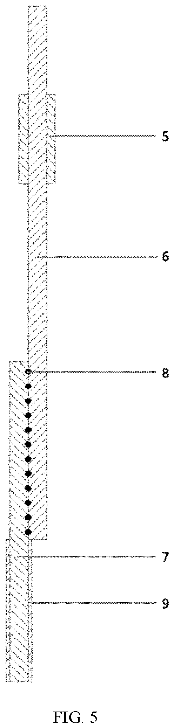

Referring to FIG.5, in an embodiment, in the step S14, the lower portion of the reference electrode substrate 7 whose upper portion is welded with the current collecting metal sheet 6 is immersed into the liquid lithium and rested for 1 minute (min) to 5 min to coat the lithium metal layer 9 on the lower portion of the reference electrode substrate 7. In this embodiment, the portion without any welding spot 8 of the substrate can be entirely immersed into the liquid lithium, and the lower portion of the reference electrode substrate 7 can be fully wetted with the lithium metal to allow the lithium metal layer 9 to be formed on the lower portion of the reference electrode substrate 7. The lithium metal layer 9 can have a thickness of 10 µm to 100 µm.

In an embodiment, in the step S15, the reference electrode 2 welded with the current collecting metal sheet 6 is taken out from the liquid lithium and cooled. The portion below the tab binder 5 of the reference electrode 2 is wrapped with the separator by the winding method. The separator can be wrapped tightly and entirely around the current collecting metal sheet 6 and the reference electrode substrate 7, thereby obtaining the reference electrode 2 wrapped with the separator. A material of the separator is porous polypropylene, porous polyethylene, porous polypropylene coated with ceramic, porous polyethylene coated with ceramic, or non-woven fabric.

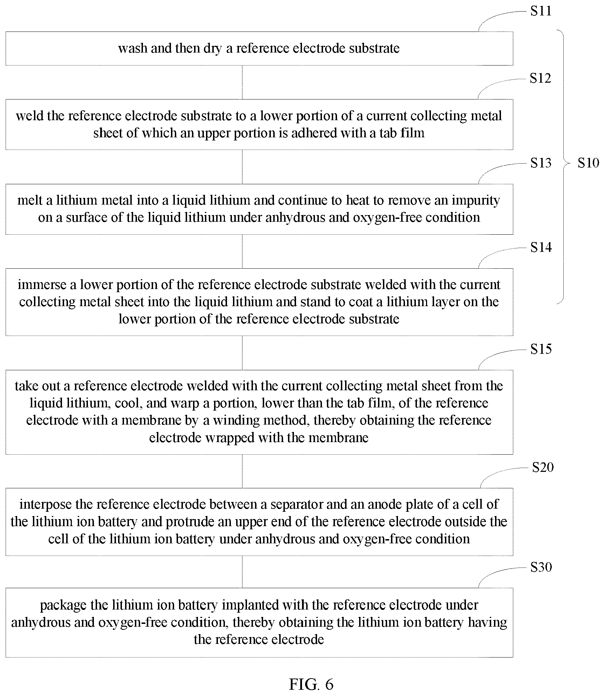

Referring to FIGs. 6 to 7, a method for making a lithium ion battery having a reference electrode is provided in the present disclosure. The method for making the lithium ion battery having the reference electrode includes making two parts: a reference electrode and a lithium ion battery. The method includes:
S10, making a reference electrode 2, which includes:
S11, washing and then drying a reference electrode substrate 7;
S12, welding the reference electrode substrate 7 to a lower portion of a current collecting metal sheet 6, an upper portion of which is adhered with a tab binder 5;
S13, melting a lithium metal to liquid state and continuing heating to remove an impurity on a surface of the liquid state lithium metal under a water-free and oxygen-free condition;
S14, immersing a lower portion of the reference electrode substrate 7 welded with the current collecting metal sheet 6 into the liquid lithium and standing to coat a lithium metal layer on the lower portion of the reference electrode substrate 7; and
S15, taking out the reference electrode 2 welded with the current collecting metal sheet 6 from the liquid lithium, cooling, and warping a portion below the tab binder 5 of the reference electrode 2 with a separator by a winding method, thereby obtaining the reference electrode 2 wrapped with the separator;

The method further includes making the lithium ion battery 1 having the reference electrode 2, which includes:
S20, interposing the reference electrode 2 between a separator 11 and an anode plate of a cell of the lithium ion battery 1 and protruding an upper end of the reference electrode 2 out from the cell of the lithium ion battery 1 under the water-free and oxygen-free condition; and
S30, packaging the lithium ion battery 1 implanted with the reference electrode 2 under the water-free and oxygen-free condition, thereby obtaining the lithium ion battery 1 having the reference electrode 2.

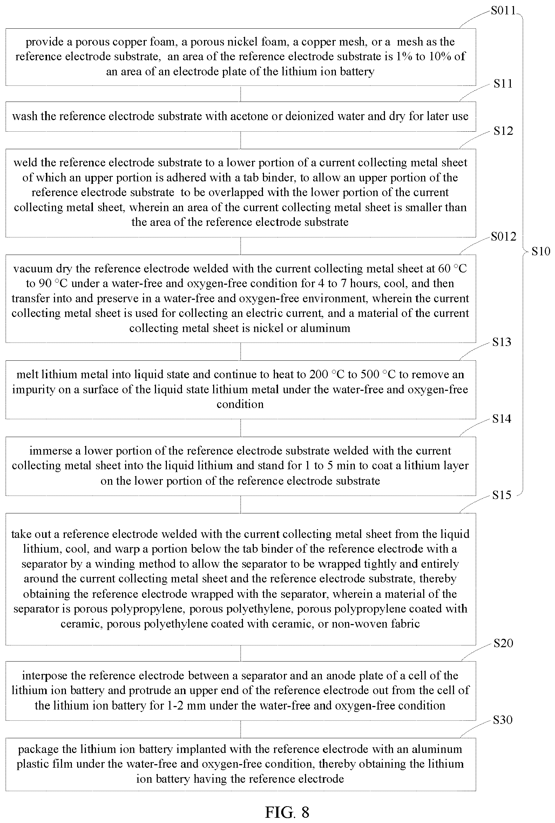

Referring to FIG. 8, in an embodiment, prior to the step S11, S011, a porous copper foam, a porous nickel foam, a copper mesh, or a mesh is adopted as the reference electrode substrate 7. An area of the reference electrode substrate 7 is 1% to 10% of an area of an electrode plate of the lithium ion battery 1. In the step S11, the reference electrode substrate 7 is washed with acetone or deionized water and then dried for later use. In this embodiment, the material of the reference electrode substrate 7 can have a pore size of 50 µm to 500 µm, and a thickness of the reference electrode substrate 7 can be 0.1 mm to 1 mm.

In an embodiment, in the step S12, the reference electrode substrate 7 is welded to the lower portion of the current collecting metal sheet 6 whose upper portion is adhered with the tab binder 5, to allow an upper portion of the reference electrode substrate 7 to be overlapped with the lower portion of the current collecting metal sheet 6. An area of the current collecting metal sheet 6 is smaller than an area of the reference electrode substrate 7. After the step S12, S012, the reference electrode 2 welded with the current collecting metal sheet 6 is vacuum dried at 60 °C to 90 °C under the water-free and oxygen-free condition for 4 to 7 hours, cooled, and then transferred into and preserved in a water-free and oxygen-free environment. The current collecting metal sheet 6 is used for collecting an electric current. A material of the current collecting metal sheet 6 is nickel or aluminum. In this embodiment, a thickness of the current collecting metal sheet 6 can be 0.1 mm to 1 mm. A length of the current collecting metal sheet 6 can depend on a location of the reference electrode 2 disposed with respect to the battery, and can be 10 mm to 30 mm.

In an embodiment, in the step S13, the lithium metal is melted into the liquid state and is continuously heated to 200 °C to 500 °C to remove the impurity on the surface of the liquid state lithium metal under the water-free and oxygen-free condition.

In an embodiment, in the step S14, the lower portion of the reference electrode substrate 7 whose upper portion is welded with the current collecting metal sheet 6 is immersed into the liquid lithium and rested for 1 min to 5 min to coat the lithium metal layer 9 on the lower portion of the reference electrode substrate 7. In this embodiment, the portion without any welding spot 8 of the substrate can be entirely immersed into the liquid lithium, and the lower portion of the reference electrode substrate 7 can be fully wetted with the lithium metal to allow the lithium metal layer 9 to be formed on the lower portion of the reference electrode substrate 7. The lithium metal layer 9 can have a thickness of 10µm to 100µm.

In an embodiment, in the step S15, the reference electrode 2 welded with the current collecting metal sheet 6 is taken out from the liquid lithium and cooled. The portion below the tab binder 5 of the reference electrode 2 is wrapped with the separator by the winding method. The separator can be wrapped tightly and entirely around the current collecting metal sheet 6 and the reference electrode substrate 7, thereby obtaining the reference electrode 2 wrapped with the separator. A material of the separator is porous polypropylene, porous polyethylene, porous polypropylene coated with ceramic, porous polyethylene coated with ceramic, or non-woven fabric.

In an embodiment, in the step 20, the reference electrode 2 is interposed between the separator 11 and the anode plate of the cell of the lithium ion battery 1. The upper end of the reference electrode 2 is protruded out from the cell of the lithium ion battery 1 for 1 mm to 2 mm under the water-free and oxygen-free condition.

In an embodiment, in the step S30, the lithium ion battery 1 implanted with the reference electrode 2 is packaged with an aluminum plastic film under the water-free and oxygen-free condition, thereby obtaining the lithium ion battery 1 having the reference electrode 2.

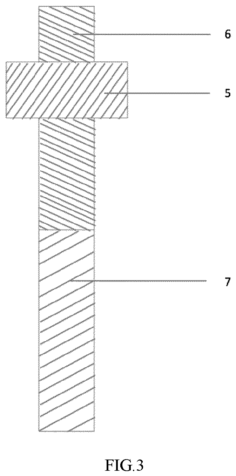

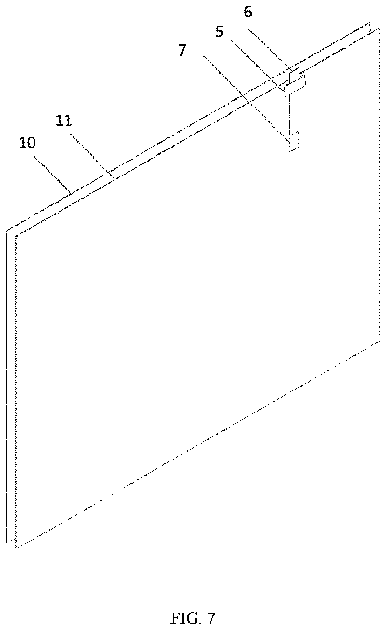

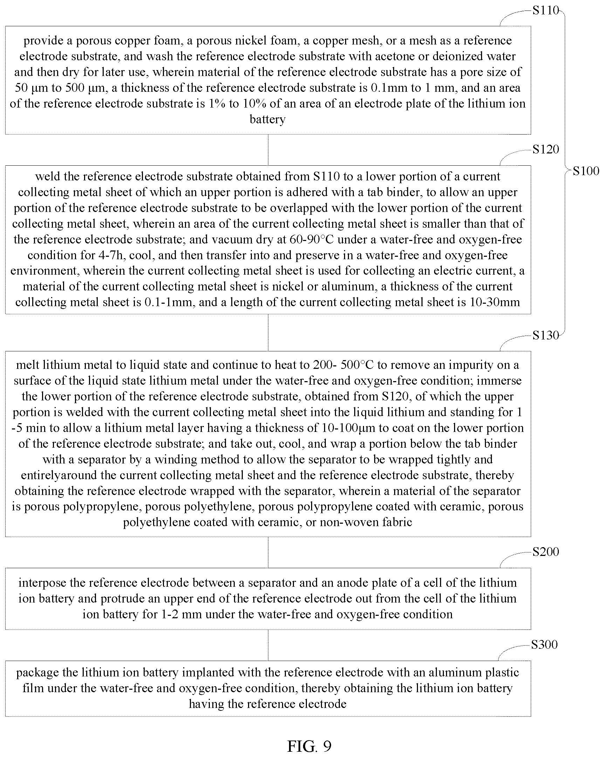

Referring to FIG.9, a method for making a lithium ion battery having a reference electrode is provided in the present disclosure. The method including the following steps:
S100, a reference electrode 2 is made as follows:
S110, a porous copper foam, a porous nickel foam, a copper mesh, or a mesh is adopted as the reference electrode substrate 7. The reference electrode substrate 7 is washed with acetone or deionized water and then dried for later use. The material of the reference electrode substrate 7 has a pore size of 50 µm to 500 µm. A thickness of the reference electrode substrate 7 is 0.1 mm to 1 mm. An area of the reference electrode substrate 7 is 1% to 10% of an area of an electrode plate of the lithium ion battery 1.
S120, the reference electrode substrate 7 obtained from the step S110 is welded to a lower portion of a current collecting metal sheet 6, an upper portion of which is adhered with a tab binder 5, to allow an upper portion of the reference electrode substrate 7 to be overlapped with the lower portion of the current collecting metal sheet 6, vacuum dried at 60 °C to 90 °C under a water-free and oxygen-free condition for 4 to 7 hours, cooled, and then transferred into and preserved in a water-free and oxygen-free environment. The current collecting metal sheet 6 is used for collecting an electric current. A material of the current collecting metal sheet 6 is nickel or aluminum. A thickness of the current collecting metal sheet 6 is 0.1 mm to 1 mm. A length of the current collecting metal sheet 6 depends on a location of the reference electrode 2 disposed with respect to the battery and can be 10 mm to 30 mm. The tab binder 5 disposed on the upper portion of the current collecting metal sheet 6 is configured to fix the reference electrode 2 relative to the cell of the lithium ion battery 1 when the reference electrode 2 is inserted into the cell, as shown in FIGs. 3 and 5.
S130, lithium metal is melted to liquid state and continued to heat to 200 °C to 500 °C to remove an impurity on a surface of the liquid state lithium metal under the water-free and oxygen-free condition. The lower portion of the reference electrode substrate 7 whose upper portion is welded with the current collecting metal sheet 6 obtained from the step S120 is immersed into the liquid lithium and stood for 1 min to 5 min. The portion without any welding spot 8 of the substrate should be entirely immersed into the liquid lithium. The lower portion of the reference electrode substrate 7 is fully wetted by the lithium metal, so as to allow a lithium metal layer 9 having a thickness of 10 µm to 100 µm to be formed on the lower portion of the reference electrode substrate 7. The electrode is taken out, cooled, and a portion below the tab binder 5 is wrapped with a separator by a winding method to allow the separator to be wrapped tightly and entirely around the current collecting metal sheet 6 and the reference electrode substrate 7, thereby obtaining a reference electrode 2 wrapped with the separator. A material of the separator is porous polypropylene, porous polyethylene, porous polypropylene coated with ceramic, porous polyethylene coated with ceramic, or non-woven fabric. The separator can prevent the reference electrode 2 from directly contacting with a cathode 3 and an anode 4 of the lithium ion battery 1 and can allow lithium ions to pass therethrough.
S200, the reference electrode 2 obtained from the step S100 is interposed between a separator 11 and an anode plate of a cell of the lithium ion battery 1 under the water-free and oxygen-free condition, as shown in FIG. 7. An upper end of the reference electrode 2 is protruded out from the cell of the lithium ion battery 1 for 1 mm to 2 mm. In order to show the location of the reference electrode 2 disposed with respect to the cell of the lithium ion battery 1, only the cathode plate 10 in the cell of the lithium ion battery 1 is shown while the anode plate of the lithium ion battery 1 is not shown.
S300, the lithium ion battery 1 implanted with the reference electrode 2 is packed with an aluminum plastic film under the water-free and oxygen-free condition, thereby obtaining the lithium ion battery 1 having the reference electrode 2.

Two examples of making the lithium ion battery 1 having the reference electrode 2 according to the present disclosure are described as below.

### Example 1

S100, a reference electrode 2 is made, and a specific process is as below.

S110, a porous copper foam is provided as a reference electrode substrate 7. A material of the reference electrode substrate 7 has a pore size of 50 µm. A thickness of the reference electrode substrate 7 is 0.2mm. An area of the reference electrode substrate 7 is 2 % of an area of an electrode plate of a lithium ion battery 1. The reference electrode substrate 7 is a rectangle sheet with a length of 10 mm and a width of 5 mm. The reference electrode substrate 7 is washed with acetone or deionized water and then dried for use.

S120, the reference electrode substrate 7 obtained from the step S110 is welded to a lower portion of a current collecting metal sheet 6 to allow an upper portion of the reference electrode substrate 7 to be overlapped with the lower portion of the current collecting metal sheet 6. An upper portion of the current collecting metal sheet 6 is adhered with a tab binder 5. In this embodiment, preferably, the current collecting nickel sheet 6 having a same width as the reference electrode substrate 7 and a length of 20 mm, provided with the tab binder 5, is used for welding. The reference electrode substrate 7 is vacuum dried at 80 °C under the water-free and oxygen-free condition for 5 hours, cooled, and transferred into and preserved in a water-free and oxygen-free environment.

S130, lithium metal is melted into liquid state and continued to heat to 400 °C to remove an impurity on a surface of the liquid state lithium metal under the water-free and oxygen-free condition. The lower portion of the reference electrode substrate 7 whose upper portion is welded with the current collecting metal sheet 6 obtained from the step S120 is immersed into the liquid lithium and stood for 3 min. The portion without any welding spot 8 of the substrate is entirely immersed into the liquid lithium. The lower portion of the reference electrode substrate 7 is fully wetted by the lithium metal, so as to allow a lithium metal layer to coat on the lower portion of the reference electrode substrate 7. The reference electrode 2 is taken out from the liquid lithium, a surface of the reference electrode 2 is immediately blew with hot air at 400 °C to remove the lithium filled in pores to expose the pores. In this embodiment, a thickness of the lithium metal layer 9 grown is about 10 µm. After being cooled, a portion below the tab binder 5 of the reference electrode 2 is wrapped with a separator by a winding method. The current collecting metal sheet 6 and the entire reference electrode substrate 7 are wrapped tightly, thereby obtaining the reference electrode 2 wrapped with the separator. A material of the separator is porous polypropylene. The separator can prevent the reference electrode 2 from directly contacting with a cathode 3 and an anode 4 of the lithium ion battery 1 and can allow lithium ions to pass therethrough;
S200, the reference electrode 2 obtained from the step S100 is interposed between a separator 11 and an anode plate of a cell of the lithium ion battery 1 under the water-free and oxygen-free condition. In this embodiment, preferably, a soft package battery is an object to be tested. The nude cell of the battery is placed into the water-free and oxygen-free environment. The reference electrode 2 is interposed between a cathode plate 10 and an anode plate of the nude cell, more specifically, located at an interface between a separator 11 and the anode plate. The reference electrode 2 can be interposed between any two plates except the outermost electrode plate. The reference electrode 2 can be located at anywhere on the plate, including but not limited to a center, a corner, and an edge of the plate according to needs. In this embodiment, the reference electrode 2 is interposed from a central area of an edge, while an upper end of the reference electrode 2 is protruded out from the cell of the lithium ion battery for 2 mm.

S300, the lithium ion battery 1 provided with the reference electrode 2 obtained from the step S200 is packaged by an aluminum plastic film under the water-free and oxygen-free condition, thereby obtaining the lithium ion battery 1 having the reference electrode 2.

### Example 2

S100, a reference electrode 2 is made, and a specific process is as below.

S110, a porous nickel foam is provided as a reference electrode substrate 7. A material of the reference electrode substrate 7 has a pore size of 100 µm. A thickness of the reference electrode substrate 7 is 0.2mm. An area of the reference electrode substrate 7 is 5% of an area of an electrode plate of a lithium ion battery 1. The reference electrode substrate 7 is sized to a rectangle sheet with a length of 12 mm and a width of 7 mm. The reference electrode substrate 7 is washed with acetone or deionized water and then dried for use.

S120, the reference electrode substrate 7 obtained from the step S110 is welded to a lower portion of a current collecting metal sheet 6 to allow an upper portion of the reference electrode substrate 7 to be overlapped with the lower portion of the current collecting metal sheet 6. An upper portion of the current collecting metal sheet 6 is adhered with a tab binder 5. In this embodiment, preferably, the current collecting nickel sheet 6 having a same width as the reference electrode substrate 7 and a length of 20 mm and provided with the tab binder 5 is used for welding. The reference electrode substrate 7 is vacuum dried at 90°C under the water-free and oxygen-free condition for 5 hours, cooled, and transferred into and preserved in a water-free and oxygen-free environment;
S130, lithium metal is melted into liquid state and continued to heat to 400 °C to remove an impurity on a surface of the liquid state lithium metal under the water-free and oxygen-free condition. The lower portion of the reference electrode substrate 7 whose the upper portion is welded with the current collecting metal sheet 6 obtained from the step S120 is immersed into the liquid lithium and stood for 4 min. The portion without any welding spot 8 of the substrate is entirely immersed into the liquid lithium. The lower portion of the reference electrode substrate 7 is fully wetted by the lithium metal, so as to allow a lithium metal layer to coat on the lower portion of the reference electrode substrate 7. The reference electrode 2 is taken out from the liquid lithium, a surface of the reference electrode 2 is immediately blew with hot air at 400 °C to remove the lithium filled in pores to expose the pores. In this embodiment, a thickness of the lithium metal layer 9 grown is about 30 µm. After being cooled, a portion, below the tab binder 5 of the reference electrode 2 is wrapped with a separator by a winding method. The current collecting metal sheet 6 and the entire reference electrode substrate 7 are wrapped tightly, thereby obtaining the reference electrode 2 wrapped with the separator. A material of the separator is porous polypropylene. The separator can prevent the reference electrode 2 from directly contacting with a cathode 3 and an anode 4 of the lithium ion battery 1 and can allow lithium ions to pass therethrough.

S200, the reference electrode 2 obtained from the step S100 is interposed between a separator 11 and an anode plate of a cell of the lithium ion battery 1 under the water-free and oxygen-free condition. In this embodiment, preferably, a soft package battery is an object to be tested. The nude cell of the battery is placed into the water-free and oxygen-free environment. The reference electrode 2 is interposed between a cathode plate 10 and an anode plate of the nude cell, more specifically, disposed at an interface between a separator 11 and the anode plate. The reference electrode 2 can be interposed between any two plates except the outermost electrode plate. The reference electrode 2 can be located at anywhere on the plate, including but not limited to a center, a corner, and an edge of the plate according to needs. In this embodiment, the reference electrode 2 is interposed from a central area of an edge, while an upper end of the reference electrode 2 is protruded out from the cell of the lithium ion battery for 2 mm.

S300, the lithium ion battery 1 provided with the reference electrode 2 obtained from the step S200 is packaged by an aluminum plastic film under the water-free and oxygen-free condition, thereby obtaining the lithium ion battery 1 having the reference electrode 2.

### Example 3

S100, a reference electrode 2 is made, and a specific process is as below.

S110, a porous copper mesh is provided as a reference electrode substrate 7. A material of the reference electrode substrate 7 has a pore size of 300 µm. A thickness of the reference electrode substrate 7 is 0.2mm. An area of the reference electrode substrate 7 is 2% of an area of an electrode plate of a lithium ion battery 1. The reference electrode substrate 7 is a rectangle sheet with a length of 20 mm and a width of 10 mm. The reference electrode substrate 7 is washed with acetone or deionized water and then dried for use.

S120, the reference electrode substrate 7 obtained from the step S110 is welded to a lower portion of a current collecting metal sheet 6 to allow an upper portion of the reference electrode substrate 7 to be overlapped with the lower portion of the current collecting metal sheet 6. An upper portion of the current collecting metal sheet 6 is adhered with a tab binder 5. In this embodiment, preferably, the current collecting nickel sheet 6 having a same width as the reference electrode substrate 7 and a length of 20 mm and provided with the tab binder 5 is used for welding. The reference electrode substrate 7 is vacuum dried at 80°C under the water-free and oxygen-free condition for 5 hours, cooled, and transferred into and preserved in a water-free and oxygen-free environment;
S130, a lithium metal is melted into liquid state and continued to heat to 400 °C to remove an impurity on a surface of the liquid state lithium metal under the water free and oxygen-free condition. The lower portion of the reference electrode substrate 7 whose upper portion is welded with the current collecting metal sheet 6 obtained from the step S120 is immersed into the liquid lithium and stood for 3 min. The portion without any welding spot 8 of the substrate is entirely immersed into the liquid lithium. The lower portion of the reference electrode substrate 7 is fully wetted by the lithium metal, so as to allow a lithium metal layer to coat on the lower portion of the reference electrode substrate 7. The reference electrode 2 is taken out from the liquid lithium, and a surface of the reference electrode 2 is immediately blew with hot air at 400 °C to remove the lithium filled in pores to expose the pores. In this embodiment, a thickness of the lithium metal layer 9 grown is about 100 µm. After being cooled, a portion below the tab binder 5 of the reference electrode 2 is wrapped with a separator by a winding method. The current collecting metal sheet 6 and the entire reference electrode substrate 7 are wrapped tightly, thereby obtaining the reference electrode 2 wrapped with the separator. A material of the separator is porous polypropylene. The separator can prevent the reference electrode 2 from directly contacting with a cathode 3 and an anode 4 of the lithium ion battery 1 and can allow lithium ions to pass therethrough.

S200, the reference electrode 2 obtained from the step S100 is interposed between a separator 11 and an anode plate of a cell of the lithium ion battery 1 under the water-free and oxygen-free condition. In this embodiment, preferably, a soft package battery is an object to be tested. The nude cell of the battery is placed into the water-free and oxygen-free environment. The reference electrode 2 is interposed between a cathode plate 10 and an anode plate of the nude cell, more specifically, disposed at an interface between a separator 11 and the anode plate. The reference electrode 2 can be interposed between any two plates except the outermost electrode plate. The reference electrode 2 can be located at anywhere on the plate, including but not limited to a center, a corner, and an edge according to needs. In this embodiment, the reference electrode 2 is interposed from a central area of an edge, while an upper end of the reference electrode 2 is protruded out from the cell of the lithium ion battery for 2 mm.

S300, the lithium ion battery 1 provided with the reference electrode 2 obtained from the step S200 is packaged by an aluminum plastic film under the water-free and oxygen-free condition, thereby obtaining the lithium ion battery 1 having the reference electrode 2.

### Example 4

S100, a reference electrode 2 is made, and a specific process is as below.

S110, a porous nickel mesh is provided as a reference electrode substrate 7. A material of the reference electrode substrate 7 has a pore size of 500 µm. A thickness of the reference electrode substrate 7 is 0.2mm. An area of the reference electrode substrate 7 is 1% of an area of an electrode plate of a lithium ion battery 1. The reference electrode substrate 7 is a rectangle sheet with a length of 20 mm and a width of 8 mm. The reference electrode substrate 7 is washed with acetone or deionized water and then dried for use.

S120, the reference electrode substrate 7 obtained from the step S110 is welded to a lower portion of a current collecting metal sheet 6 to allow an upper portion of the reference electrode substrate 7 to be overlapped with the lower portion of the current collecting metal sheet 6. An upper portion of the current collecting metal sheet 6 is adhered with a tab binder 5. In this embodiment, preferably, a current collecting nickel sheet 6 having a same width as the reference electrode substrate 7 and a length of 20 mm and provided with the tab binder 5 is used for welding. The reference electrode substrate 7 is vacuum dried at 80°C under the water-free and oxygen-free condition for 5 hours, cooled, and transferred into and preserved in a water-free and oxygen-free environment.

S130, lithium metal is melted into liquid state and continued to heat to 400 °C to remove an impurity on a surface of the liquid state lithium metal under the water-free and oxygen-free condition. The lower portion of the reference electrode substrate 7 whose upper portion is welded with the current collecting metal sheet 6 obtained from the step S120 is immersed into the liquid lithium and stood for 3 min. The portion without any welding spot 8 of the substrate is entirely immersed into the liquid lithium, and the lower portion of the reference electrode substrate 7 is fully wetted by the lithium metal, so as to allow a lithium metal layer to coat on the lower portion of the reference electrode substrate 7. A reference electrode 2 is taken out from the liquid lithium and a surface of the reference electrode 2 is immediately blew with hot air at 400 °C to remove the lithium filled in pores to expose the pores. In this embodiment, a thickness of the lithium metal layer 9 grown is about 100 µm. After being cooled, a portion below the tab binder 5 of the reference electrode 2 is wrapped with a separator by a winding method. The current collecting metal sheet 6 and the entire reference electrode substrate 7 are wrapped tightly, thereby obtaining the reference electrode 2 wrapped with the separator. A material of the separator is porous polypropylene. The separator can prevent the reference electrode 2 from directly contacting with a cathode 3 and an anode 4 of the lithium ion battery 1 and can allow lithium ions to pass therethrough.

S200, the reference electrode 2 obtained from the step S100 is interposed between a separator 11 and an anode plate of a cell of the lithium ion battery 1 under the water-free and oxygen-free condition. In this embodiment, preferably, a soft package battery is an object to be tested. The nude cell of the battery is placed into the water-free and oxygen-free environment. The reference electrode 2 is interposed between a cathode plate 10 and an anode plate of the nude cell, more specifically, disposed at an interface between a separator 11 and the anode plate. The reference electrode 2 can be interposed between any two plates except the outermost electrode plate. The reference electrode 2 can be located at anywhere on the plate, including but not limited to a center, a corner, and an edge according to needs. In this embodiment, the reference electrode 2 is interposed from a central area of an edge, while an upper end of the reference electrode 2 is protruded out from the cell of the lithium ion battery for 2 mm.

S300, the lithium ion battery 1 provided with the reference electrode 2 obtained from the step S200 is packaged by an aluminum plastic film under the water-free and oxygen-free condition, thereby obtaining the lithium ion battery 1 having the reference electrode 2.

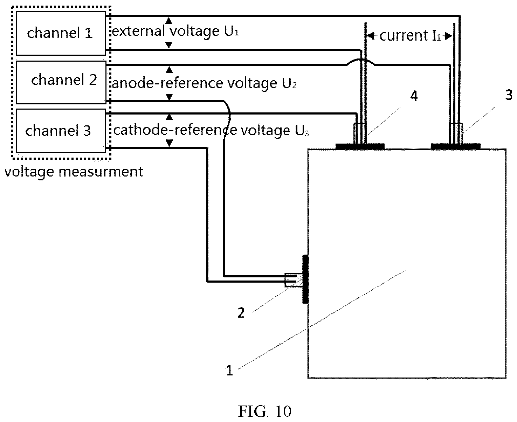

A charge-discharge test is performed by connecting the cathode 3 and the anode 4 of the lithium ion battery 1 having the reference electrode 2 to an instrument such as a charge-discharge tester or other power supply. The performance of assembled lithium ion battery 1 having the reference electrode 2 is measured by the measuring instrument. As shown in FIG. 10 which is a schematic measuring circuit diagram, a high input impedance voltage synchronous acquisition equipment having three testing channels is used, an external voltage U1 of the lithium ion battery 1 having the reference electrode 2 is measured and acquired via the channel 1, an anode-reference voltage U2 is measured and acquired via the channel 2, and a cathode-reference voltage U3 is measured and acquired via the channel 3. Moreover, different types of charge-discharge cycling tests with a higher cutoff voltage of 4.2 V and a lower cutoff voltage of 2.5 V are performed on the lithium ion battery 1 having the reference electrode 2 via the channel 1 during which charge and discharge currents are recorded. Result analyses for two types of charge-discharge cycling tests are described as below.

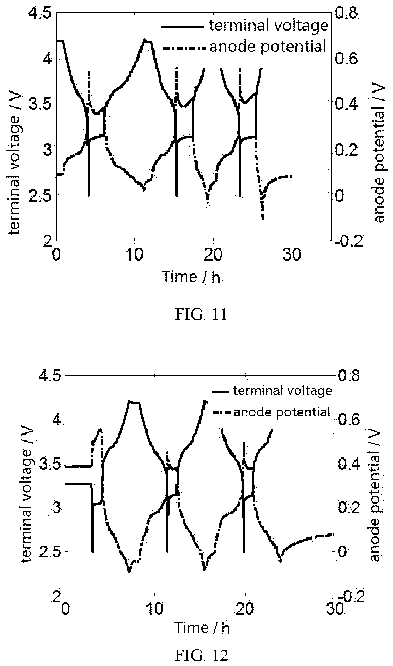

FIG. 11 is a diagram showing results of a charge-discharge rate performance test for the battery having the reference electrode 2, in which a horizontal axis denotes a time during the test and a vertical axis denotes a tested voltage. External voltage is shown by the solid line. Voltage of the individual electrode, which is the anode 4, with respect to the reference electrode 2 is shown by the dotted line. During the test, the charge-discharge current rate is gradually increased from 0.5 C to 1.5 C. More specifically, the battery is charged and discharged at 0.5 C in the first charge-discharge cycle, charged and discharged at 1 C in the second charge-discharge cycle, and charged and discharged at 1.5 C in the third charge-discharge cycle, as is shown in the FIG. 11. It can be found upon this test that the variations of the external voltage in the three different charge-discharge cycles using different charge-discharge rates are consistent, while the variations of the voltage of the anode 4 tested with respect to the reference electrode 2 clearly tend to increase with the increase of the charge-discharge rate. Such feature that the voltage of the anode 4 is changed with the change of the charge-discharge rate, cannot be tested by only measuring the external voltage. By using the reference electrode 2, this voltage variation for an individual electrode can be directly and conveniently tested, which demonstrates the superiority of the testing using the reference electrode 2.

FIG. 12 is a diagram showing results of a capacity test for the battery having the reference electrode 2, in which a horizontal axis denotes a time during the test and a vertical axis denotes a tested voltage. External voltage of the battery is shown by the solid line. Voltage of the individual electrode, which is the anode 4, with respect to the reference electrode 2 of the battery is shown by the dotted line. During the test, the charge-discharge current rate is kept at 1C. It can be seen that the voltage of the anode 4 as the individual electrode with respect to the reference electrode is stable in each charge-discharge cycle, while the voltage of the whole battery is also stable in each charge-discharge cycle, suggesting that the reference electrode 2 has a satisfactory service time and does not interfere with the normal work of the battery.

## Claims

1. A method for making a reference electrode, **characterized by** comprising:
S11, washing and then drying a reference electrode substrate (7);
S12, welding the reference electrode substrate (7) to a lower portion of a current collecting metal sheet (6), an upper portion of which is adhered with a tab binder (5);
S13, melting lithium metal to liquid state and continuing heating to remove an impurity on a surface of the liquid state lithium metal under a water-free and oxygen-free condition;
S14, immersing a lower portion of the reference electrode substrate (7) welded with the current collecting metal sheet (6) into the liquid lithium and standing to coat a lithium metal layer on the lower portion of the reference electrode substrate (7);
S15, taking out a reference electrode (2) welded with the current collecting metal sheet (6) from the liquid lithium, cooling, and warping a portion below the tab binder (5) of the reference electrode (2) with a separator by a winding method, thereby obtaining a reference electrode (2) wrapped with the separator.

2. The method for making the reference electrode of claim 1, **characterized in that** prior to the step S11,
S011, providing a porous copper foam, a porous nickel foam, a copper mesh, or a mesh as the reference electrode substrate (7).

3. The method for making the reference electrode of claim 1, **characterized in that** in the step S11, the reference electrode substrate (7) is washed with acetone or deionized water and then dried for later use.

4. The method for making the reference electrode of claim 1, **characterized in that** in the step S12, the reference electrode substrate (7) is welded to the lower portion of the current collecting metal sheet (6) of which the upper portion is adhered with the tab binder(5), to allow an upper portion of the reference electrode substrate (7) to be overlapped with the lower portion of the current collecting metal sheet (6), and an area of the current collecting metal sheet (6) is smaller than an area of the reference electrode substrate (7).

5. The method for making the reference electrode of claim 1, **characterized in that** after the step S12,
vacuum drying the reference electrode (2) welded with the current collecting metal sheet (6) at 60 °C to 90 °C under the water-free and oxygen-free condition for 4 to 7 hours, cooing, and then transferring into and preserving in a water-free and oxygen-free environment, wherein the current collecting metal sheet (6) is configured for collecting an electric current, and a material of the current collecting metal sheet (6) is nickel or aluminum.

6. The method for making the reference electrode of claim 1, **characterized in that** in the step S13, the lithium metal is melted into the liquid state and continuously heated to 200 °C to 500 °C to remove the impurity on the surface of the liquid state lithium metal under the water-free and oxygen-free condition.

7. The method for making the reference electrode of claim 1, **characterized in that** in the step S14, the lower portion of the reference electrode substrate (7) of which the upper portion is welded with the current collecting metal sheet (6) is immersed into the liquid lithium and rested for 1 min to 5 min to coat the lithium metal layer (9) on the lower portion of the reference electrode substrate (7).

8. The method for making the reference electrode of claim 1, **characterized in that** in the step S15, the reference electrode (2) welded with the current collecting metal sheet (6) is taken out from the liquid lithium and cooled, and the portion below the tab binder(5) of the reference electrode (2) is wrapped with the separator by the winding method to allow the separator to be wrapped tightly and entirely around the current collecting metal sheet (6) and the reference electrode substrate (7), thereby obtaining the reference electrode (2) wrapped with the separator, and a material of the separator is porous polypropylene, porous polyethylene, porous polypropylene coated with ceramic, porous polyethylene coated with ceramic, or non-woven fabric.

9. A method for making a lithium ion battery having a reference electrode, **characterized by** comprising:
S10, making a reference electrode (2), which comprises:
S11, washing and then drying a reference electrode substrate (7);
S12, welding the reference electrode substrate (7) to a lower portion of a current collecting metal sheet (6), an upper portion of which is adhered with a tab binder (5);
S13, melting lithium metal to liquid state and continuing heating to remove an impurity on a surface of the liquid state lithium metal under a water-free and oxygen-free condition;
S14, immersing a lower portion of the reference electrode substrate (7) welded with the current collecting metal sheet (6) into the liquid lithium and standing to coat a lithium metal layer on the lower portion of the reference electrode substrate (7); and
S15, taking out a reference electrode (2) welded with the current collecting metal sheet (6) from the liquid lithium, cooling, and warping a portion below the tab binder (5) of the reference electrode (2) with a separator by a winding method, thereby obtaining the reference electrode (3) wrapped with the separator;
S20, interposing the reference electrode (2) between a separator 11 and an anode plate of a cell of the lithium ion battery (1) and protrude an upper end of the reference electrode (2) out from the cell of the lithium ion battery (1) under the water-free and oxygen-free condition; and
S30, packaging the lithium ion battery (1) implanted with the reference electrode (2) under the water-free and oxygen-free condition, thereby obtaining the lithium ion battery (1) having the reference electrode (2).

10. The method for making the lithium ion battery having the reference electrode of claim 9, **characterized in that** prior to the step S11,
step S011, providing a porous copper foam, a porous nickel foam, a copper mesh, or a mesh as the reference electrode substrate (7), wherein an area of the reference electrode substrate (7) is 1% to 10% of an area of an electrode plate of the lithium ion battery (1).

11. The method for making the lithium ion battery having the reference electrode of claim 9, **characterized in that** in the step S11, the reference electrode substrate (7) is washed with acetone or deionized water and then dried for later use.

12. The method for making the lithium ion battery having the reference electrode of claim 9, **characterized in that** in the step S12, the reference electrode substrate (7) is welded to the lower portion of the current collecting metal sheet (6) of which the upper portion is adhered with the tab binder(5), to allow an upper portion of the reference electrode substrate (7) to be overlapped with the lower portion of the current collecting metal sheet (6), and an area of the current collecting metal sheet (6) is smaller than an area of the reference electrode substrate (7).

13. The method for making the lithium ion battery having the reference electrode of claim 9, **characterized in that** after the step S12,
vacuum drying the reference electrode (2) welded with the current collecting metal sheet (6) at 60 °C to 90 °C under the water-free and oxygen-free condition for 4 to 7 hours, cooing, and then transferring into and preserving in a water-free and oxygen-free environment, wherein the current collecting metal sheet (6) is configured for collecting an electric current, and a material of the current collecting metal sheet (6) is nickel or aluminum.

14. The method for making the lithium ion battery having the reference electrode of claim 9, **characterized in that** in the step S13, the lithium metal is melted into the liquid state and continuously heated to 200 °C to 500 °C to remove the impurity on the surface of the liquid state lithium metal under the water-free and oxygen-free condition.

15. The method for making the lithium ion battery having the reference electrode of claim 9, **characterized in that** in the step S14, the lower portion of the reference electrode substrate (7) of which the upper portion is welded with the current collecting metal sheet (6) is immersed into the liquid lithium and rested for 1 min to 5 min to coat the lithium metal layer (9) on the lower portion of the reference electrode substrate (7).

16. The method for making the lithium ion battery having the reference electrode of claim 9, **characterized in that** in the step S15, the reference electrode (2) welded with the current collecting metal sheet (6) is taken out from the liquid lithium and cooled, and the portion below the tab binder (5) of the reference electrode (2) is wrapped with the separator by the winding method to allow the separator to be wrapped tightly and entirely around the current collecting metal sheet (6) and the reference electrode substrate (7), thereby obtaining the reference electrode (2) wrapped with the separator, and a material of the separator is porous polypropylene, porous polyethylene, porous polypropylene coated with ceramic, porous polyethylene coated with ceramic, or non-woven fabric.

17. The method for making the lithium ion battery having the reference electrode of claim 9, **characterized in that** in the step S20, the reference electrode (2) is interposed between the separator (11) and the anode plate of the cell of the lithium ion battery (1) and the upper end of the reference electrode (2) is protruded out from the cell of the lithium ion battery (1) for 1 mm to 2 mm under the water-free and oxygen-free condition.

18. The method for making the lithium ion battery having the reference electrode of claim 9, **characterized in that** in the step S30, the lithium ion battery (1) implanted with the reference electrode (2) is packaged by an aluminum plastic film under the water-free and oxygen-free condition, thereby obtaining the lithium ion battery (1) having the reference electrode (2).

19. A method for making a lithium ion battery having a reference electrode, **characterized by** comprising:
S100, making a reference electrode (2), which comprises:
S110, providing a porous copper foam, a porous nickel foam, a copper mesh, or a mesh as a reference electrode substrate (7); and washing the reference electrode substrate (7) with acetone or deionized water and then drying for later use, wherein a material of the reference electrode substrate (7) has a pore size of 50 µm to 500 µm, a thickness of the reference electrode substrate (7) is 0.1mm to 1 mm, and an area of the reference electrode substrate (7) is 1% to 10% of an area of an electrode plate of the lithium ion battery (1);
S120, welding the reference electrode substrate (7) obtained from the step S110 to a lower portion of a current collecting metal sheet (6) of which an upper portion is adhered with a tab binder(5), to allow an upper portion of the reference electrode substrate (7) to be overlapped with the lower portion of the current collecting metal sheet (6), wherein an area of the current collecting metal sheet (6) is smaller than the area of the reference electrode substrate (7); and vacuum drying at 60 °C to 90 °C under a water-free and oxygen-free condition for 4 to 7 hours, cooing, and then transferring into and preserving in a water-free and oxygen-free environment, wherein the current collecting metal sheet (6) is configured for collecting an electric current, a material of the current collecting metal sheet (6) is nickel or aluminum, a thickness of the current collecting metal sheet (6) is 0.1 mm to 1 mm, and a length of the current collecting metal sheet (6) is 10 mm to 30 mm; and
S130, melting a lithium metal into liquid state and continuing heating to 200 °C to 500 °C to remove an impurity on a surface of the liquid state lithium metal under the water-free and oxygen-free condition; immersing the lower portion of the reference electrode substrate (7) obtained from the step S120 of which the upper portion is welded with the current collecting metal sheet (6) into the liquid lithium and standing for 1 min to 5 min to allow a lithium metal layer (9) having a thickness of 10 µm to 100µm to coat on the lower portion of the reference electrode substrate (7); and taking out, cooling, and wrapping a portion below the tab binder (5) with a separator by a winding method to allow the separator to be wrapped tightly and entirely around the current collecting metal sheet (6) and the reference electrode substrate (7), thereby obtaining the reference electrode (2) wrapped with the separator, wherein a material of the separator is porous polypropylene, porous polyethylene, porous polypropylene coated with ceramic, porous polyethylene coated with ceramic, or non-woven fabric;
S200, interposing the reference electrode (2) obtained from the step S100 between a separator (11) and an anode plate of a cell of the lithium ion battery (1) under the water-free and oxygen-free condition, and protruding an upper end of the reference electrode (2) out from the cell of the lithium ion battery (1) for 1 mm to 2 mm;
S300, packaging the lithium ion battery (1) implanted with the reference electrode (2) with an aluminum plastic film under the water-free and oxygen-free condition, thereby obtaining the lithium ion battery (1) having the reference electrode (2).
